# EUROPÄISCHE PATENTSCHRIFT

(11) **EP 0 693 326 B1**
(45) Veröffentlichungstag und Bekanntmachung des Hinweises auf die Patenterteilung: **13.01.1999**
(21) Anmeldenummer: 95110867.9
(22) Anmeldetag: 12.07.1995
(51) Int. Cl.: B09C 1/02, C10G 1/04

(54) **Verfahren zur kontinuierlichen Aufbereitung und Verwertung von öl- und wasserhaltigen Feststoffen**
Method for the continuous treatment and valorization of oil and water containing solids
Procédé de traitement et de valorisation en continu de solides contenant de l'huile et de l'eau

(30) Priorität: 20.07.1994 DE 4425608
(43) Veröffentlichungstag der Anmeldung: 24.01.1996
(73) Patentinhaber: GFR Gesellschaft für die Aufbereitung und Verwertung von Reststoffen mbH, 97080 Würzburg (DE)
(72) Erfinder: Demmich, Jörg, Dr.-Ing., D-97084 Würzburg (DE); Weissflog, Eckard, Dr.rer.nat., D-97234 Reichenberg (DE); Leininger, Gerhard, Dipl.-Ing., D-97250 Erlabrunn (DE); Gerstner, Erwin, Dr.rer.nat., D-97348 Rödelsee (DE)
(74) Vertreter: Werner, Hans-Karsten, Dr.Dipl.-Chem.

(56) Entgegenhaltungen:
- EP-A- 0 185 831
- EP-A- 0 327 896
- EP-A- 0 554 467
- DE-A- 4 234 763
- DE-C- 4 224 953
- DATABASE WPI Section Ch, Week 9248 Derwent Publications Ltd., London, GB; Class H04, AN 92-395748 & JP-A-04 296 391 (MITSUBISHI PETROCHEMICAL CO. LTD.) , 20.Oktober 1992

## Beschreibung

Gegenstand der vorliegenden Erfindung ist die Verwendung eines Verfahrens zur kontinuierlichen Aufbereitung und Verwertung von öl- und wasserhaltigen Feststoffen mit hohem Anteil an feinkörnigem Material, wobei sowohl der Feststoff als auch das öl verwertet werden sollen.

Bei der Förderung und Aufbereitung von Erdöl fällt Ölschlamm und ölverunreinigter Boden an. Entsprechend den betrieblichen Aktivitäten und Ereignissen in den Erdölfeldern fallen diese Stoffe regelmäßig und auch unregelmäßig an und liegen je nach Herkunft in verschiedenen Zusammensetzungen vor. Mengen und Zusammensetzung schwanken dabei hinsichtlich Öl-, Lagerstättenwasser- und Feststoffgehalt in einem sehr großen Bereich, dennoch lassen sich die Ölschlämme etwa in flüssig, pastös und fest unterteilen, enthalten aber stets einen hohen Anteil an feinkörnigem Material. Erhebliche Mengen an Ölschlamm entstehen auch auf Bohrinseln.

Die ölhaltigen Feststoffe wurden bisher überwiegend in betriebseigenen Ölschlammdeponien abgelagert. Diese einfache Beseitigung des Ölschlamms in Deponien ist mit den heutigen umweltpolitischen Grundsätzen nicht mehr vereinbar. Die zum Teil mehrere Jahrzehnte alten Deponien besitzen keine hinreichende Abdichtung nach dem heutigen Stand der Technik, so daß eine Gefährdung der Umwelt zu befürchten ist. Für die bei der Förderung und Aufbereitung von Erdöl künftig anfallenden Ölschlämme und verunreinigten Böden bedeutet dies, daß sie, wenn sie nicht vermieden werden können, ordnungsgemäß und schadlos, gegebenenfalls nach Aufbereitung, zu verwerten sind. Wenn auch dies nicht möglich ist, sind die ölhaltigen Feststoffe geeignet vorzubehandeln und unter Berücksichtigung der gesetzlichen Rahmenbedingungen unter Wahrung des Wohls der Allgemeinheit ordnungsgemäß als Abfälle abzulagern. Gleiches gilt für die deponierten Ölschlämme.

Dieser aktuellen umweltpolitischen Entwicklung will die vorliegende Erfindung Rechnung tragen. Sie betrifft daher ein Verfahren zur Reinigung von mit unterschiedlichen Ölanteilen verunreinigten Feststoffen mit dem Ziel, sowohl die entölte Feststoff-Fraktion gemäß den Vorgaben des Kreislaufwirtschafts/Abfallgesetzes einer stofflichen Verwertung zuzuführen, als auch das Öl stofflich zu verwerten.

Dabei ist zu berücksichtigen, daß die ölhaltigen Feststoffe neben einer großen Bandbreite von Gehalten an Erdöl von ca. 3 MA-% bis 90 MA-% auch unterschiedliche Mengen an Wasser beinhalten. Bei der Feststoff-Fraktion handelt es sich insbesondere um einen sehr feinkörnigen, in der Regel Bentonit enthaltenden Stoff.

Für die Behandlung bzw. Aufbereitung dieser ölhaltigen Feststoffe bietet sich eine Reihe von unterschiedlichen Verfahren an, die jedoch aus den verschiedensten Gründen nicht zum gewünschten Erfolg führten. Mikrobiologische Verfahren sind für die Behandlung von ölverunreinigten Feststoffen nur bei maximalen Kohlenwasserstoffgehalten von etwa 3 MA-% einsetzbar. Darüber hinaus weisen die Ölschlämme oft bakterientoxische Substanzen, wie Schwermetalle, auf. Verschiedenste Waschverfahren erreichen in Folge des hohen Feinkornanteils des Feststoffs keinen hinreichenden Entölungsgrad. Verfestigungsverfahren mit unterschiedlichen Bindemitteln haben sich für höhere Ölgehalte als nicht geeignet erwiesen. Darüber hinaus tragen sie dem Verwertungsgebot nicht Rechnung. Durch Zusatz größerer Mengen an Bindemitteln wird sogar die Abfallmenge noch erhöht. Thermische Behandlungsverfahren, wie Verbrennung oder Pyrolyse, sind zwar grundsätzlich geeignet, unter Nutzung des Anteils an organischen Verbindungen eine weitgehende Mineralisierung der Ölschlämme sicherzustellen. Diese Verfahren sind jedoch sehr konstenintensiv. Darüber hinaus muß der zum Teil sehr hohe Anteil an mineralischen Feststoffen zum Beispiel in Sondermüllverbrennungsanlagen bis 1.200°C aufgeheizt werden, wobei in der Regel der wegen der unterschiedlichen Ölgehalte im Feststoff auch unterschiedliche Heizwert der Ölschlämme nicht ausreicht, um eine gewünschte autotherme Verbrennung sicherzustellen. Darüber hinaus sind erhebliche Abgasreinigungsmaßnahmen notwendig, um die zumindest in Teilmengen der Ölschlämme enthaltenen Quecksilbergehalte aus dem Verbrennungsabgas zu entfernen.

In der DE-C-42 24 953 wird ein Verfahren zur Aufarbeitung von mit Öl behafteten Industrieschlämmen beschrieben, wobei unter Industrieschlämmen produktionsspezifische Reststoffe, wie Schleifschlämme, Walzenzunder aus Hüttenwerken, Sand-Öl-Gemische aus Sandfängen von Benzin- oder Ölabscheidern oder dergleichen verstanden wird. Die mit Öl behafteten Industrieschlämme werden bevorzugt bei Umgebungstemperatur mit leicht siedenden Kohlenwasserstoffen in einer Extraktionseinrichtung entölt und die Lösemittelreste im entölten Feststoff mit Dampf ausgestrippt. Bevorzugte Ausführungsform ist die Verwendung eines Lösemittels, welches als Kopfprodukt aus dem Destillationskreislauf einer Altölrecyclinganlage anfällt. Das aus dem Lösungsmittel und dem extrahierten Öl bestehende Extrakt wird der Altölrecyclinganlage wieder zugeführt. Mit diesem Verfahren konnten bisher nur mit Altöl, nicht jedoch mit hochviskosem Erdöl behaftete Industrieschlämme mit geringem Feinkorn- und Wasseranteil diskontinuierlich mit gegebenenfalls mehrfach durchzuführender Extraktion bei Einsatz leicht siedender Kohlenwasserstoffe auf Ölgehalte bis zu 0,3 MA-% entölt werden. Der zur Abtrennung des Lösemittels aus dem Feststoff eingesetzte Sattdampf muß kondensiert und anschließend nachbehandelt werden.

In der DE-A-40 09 650 wird ein Verfahren zur kontinuierlichen Aufbereitung eines wasserhaltigen Ölschlamm-Mengestroms und eine Anlage für die Durchführung des Verfahrens beschrieben. Bei dem zu behandelnden Ölschlamm handelt es sich um ein emulsionsartiges System, wobei die geschlossene Phase Wasser und die disperse Phase das Öl darstellt. Zusätzlich weist der Ölschlamm auch feinteilige Farbstoffe auf. Zielsetzung dieses Verfahrens ist, drei Phasen, nämlich Öl, Wasser und Feststoff zu erzeugen und in dem abgetrennten und aufbereiteten Öl nur noch einen Wassergehalt von < 2 MA-% und einen Feststoffgehalt von < 0,1 MA-% zu erreichen. Darüber hinaus soll das abgetrennte und aufbereitete Wasser einen Ölgehalt < 20 ppm aufweisen. Aus der Beschreibung geht hervor, daß der Feststoffanteil in den Ölschlämmen nur eine untergeordnete Bedeutung hat und auf die Qualität des abgetrennten Feststoffes kein Wert gelegt wurde. Das Aufbereitungsverfahren arbeitet bei Temperaturen von 50°C und ist in die Gruppe der Emulsionsspaltverfahren einzuordnen, die für die vorliegende Erfindung nicht in Frage kommen.

Die DE-A-42 08 180 beschreibt ein Verfahren, bei dem Feststoffe, die schwerflüchtige Kohlenwasserstoffe und andere Begleitstoffe enthalten, einer Lösungsmittelextraktion unterworfen werden. Die Feststoffe werden anschließend zur Restlösemittelabtrennung einem Trockner zugeführt. Einsatzmaterial ist vorzugsweise Teersand. Ölverschmutzte Böden werden gegebenenfalls anschließend mit Wasserdampf gestrippt. Ähnliche Verfahren sind beschrieben in US-A-4,640,760 und US-A-5,143,598.

Die DE-A-15 45 385 beschreibt ein Verfahren zur Abtrennung von Öl aus bituminösen Materialien durch Extraktion mit einem niedrig siedenden Kohlenwasserstoff. Zielsetzung ist allein die Gewinnung von Öl.

Die EP-A-0 372 761 beschreibt die Extraktion von extrahierbaren organischen Substanzen mit verschiedenen Lösungsmitteln und die stufenweise Aufarbeitung. Zielsetzung ist auch hierbei die Gewinnung der extrahierbaren Substanzen.

Aus der EP-A- 0 327 896 ist ein Verfahren bekannt, bei dem geringe Mengen organischer Verunreinigungen aus belasteten Erdböden entfernt werden durch Zusatz etwa gleich tragte Mengen um Wasser und später organischer Lösungsmittel. Die Auftrennung der Phasen erfolgt durch Absetzen und Phasentrennung. Das gereinigte Erdreich und das abdestillierte organische Lösungsmittel werden wiederverwendet, nicht jedoch die organischen Verunreinigungen.

Aus der EP-A- 0 554 467 ist ein Verfahren zur Behandlung von öl- und Wasserhaltigen, mit organischen Schadstoffen kontaminierten Materialien bekannt, bei dem das Material mit Wasser nicht mischbaren organischen Lösungsmittels vermischt, wird, woraufhin die flüssige organische Phase mit den Schadstoffen abgetrennt wird, aus der festen Phase die verbliebenen Lösungsmittel abgetrieben und die Lösungsmittel zurückgewonnen werden.

Die Feststoffe werden deponiert.

Die Erfindung hat sich die Aufgabe gestellt, ein Verfahren zu kontinuierlichen Aufbereitung von solchen öl/wasser-haltigen Feststoffen zu entwickeln, mit dem auf einfache und wirtschaftlich günstige Weise eine sehr weitgehende Trennung des Öls vom Feststoff und eine stoffliche Verwertung des entölten Feststoffs und der flüssigen Phase möglich ist.

Diese Aufgabe wird durch die Maßnahmen des Anspruchs 1 gelöst.

Um die oben genannte Aufgabenstellung optimal zu erfüllen, wird zunächst der aus den Ölschlammdeponien ausgekofferte heterogene Ölschlamm, der einerseits in geringen Mengen Grobbestandteile, andererseits einen sehr hohen Feinkornanteil besitzt, einer Siebung zur Abtrennung der gegebenenfalls vorhandenen Grobbestandteile unterzogen. Zum Schutz der nachgeschalteten Maschinentechnik werden dabei alle Grobteile > 100 mm abgetrennt. Das abgetrennte Grobgut kann durch Bedüsen mit Wasser separat von anhaftendem Öl gereinigt und gegebenenfalls als Abfall entsorgt werden. Das Waschwasser wird vorzugsweise dem grob gesiebten Ölschlamm zugesetzt. Dadurch wird bereits in diesem Verfahrensschritt die Viskosität des eingesetzten Materials erniedrigt.

Die abgetrennte Feinfraktion wird gegebenenfalls mit den direkt bei der Erdölgewinnung und -verarbeitung anfallenden heterogenen ölhaltigen Feststoffen zusammengeführt und intensiv vermischt.

Im Gegensatz zu anderen Verfahren des Standes der Technik wird die Viskosität des Schlammes durch Zugabe von Wasser erniedrigt, was einerseits zu einer partiellen Verdrängung der löslichen Kohlenwasserstoffe aus dem Feststoff und andererseits zu einer Wirkungsgraderhöhung bei der anschließend durchgeführten Kaltextraktion führt. Dazu wird der Gesamtwassergehalt auf 25 bis 40 MA-% eingestellt. Hierzu kann auch das Wasser verwendet werden, welches zur Reinigung der Grobbestandteile verwendet wurde.

Damit eine weitestgehende Entölung des Feststoffes erfolgen kann, wird dem vorstehend beschriebenen Schlamm bei Umgebungstemperaturen ein hydrophobes Lösemittel oder -gemisch zudosiert. Dabei werden im Hinblick auf die Nachbehandlung des entölten Feststoffes bevorzugt Leichtbenzine mit einem Siedepunkt unterhalb des Wassersiedepunktes, wie z.B. Petroläther oder Lackbenzin, oder mit Wasser ein Azeotrop bildende Lösemittel, deren Siedepunkt bevorzugt zwischen 110°C und 140°C liegt, wie z.B. Toluol, Xylole oder auch Gemische aus diesen, zugesetzt.

Die entstehende Suspension wird vorzugsweise in einem Rührbehälter homogenisiert, wobei die restlichen an dem Feststoff anhaftenden organischen Stoffe abgelöst werden und von dem eingesetzten Lösungsmittel aufgenommen werden.

Nach einer unter Umständen erfolgenden weiteren Feinsiebung, bei der dann eine Feststoff-Fraktion in der Suspension vorliegt, deren Korngröße zu 100% < 10 mm und zu 90% < 2 mm ist und die ein d₅₀ im Bereich zwischen 32 µm und 90 µm aufweist, wird eine mechanische Phasentrennung durchgeführt.

Dies erfolgt mittels einer Zentrifuge oder eines Dekanters. Diese Phasentrennung erfolgt bei Normaltemperatur. Eine Temperaturerhöhung zur Viskositätserniedrigung ist nicht erforderlich.

Ein guter Wirkungsgrad wird mit diesem Verfahren bei einem Feststoff-/Öl-Verhältnis ≥ 1 erzielt, optimal arbeitet das Verfahren bei einer Einstellung des Wassergehaltes auf 25 bis 40 MA-% bezogen auf das Gesamtgewicht.

Der dabei abgetrennte feuchte Feststoff ist weitestgehend entölt und kann der weiteren Verarbeitung zugeführt werden. Die im Feststoff verbliebenen unlöslichen organischen Anteile liegen überwiegend als Asphaltene vor, was z.B. einer stofflichen Verwertung des Feststoffes im Straßenbau entgegenkommt.

Das zweite Produkt der Phasentrennung ist eine flüssige Phase, die aus Wasser, Öl und dem Lösemittel bzw. Lösemittelgemisch mit geringem Feststoff-Feinkorn-Anteil besteht. Diese flüssige Phase kann ohne weitere Nachbehandlung beispielsweise einer Rohölaufbereitung zugeführt werden, die im allgemeinen dem eigentlichen Erdöl-Raffinationsprozeß vorgeschaltet ist.

Besonders zu erwähnen ist, daß als Lösemittel eine entsprechende Siedefraktion des Raffinationsprozesses für die erfindungsgemäße Aufbereitung der Ölschlämme eingesetzt werden kann. Mit der stofflichen Verwertung der Flüssigphase im Raffinationsprozeß wird dieses entnommene Lösemittel dann im Kreislauf wieder zurückgeführt. Alternativ können auch andere Lösemittel bzw. Lösemittelgemische eingesetzt werden, zum Beispiel aus Spülprozessen oder aus Lösemittelrückgewinnungsverfahren. Die abgetrennte flüssige Phase kann auch in anderen Prozessen, wie Hydrierung oder Vergasung weitgehend stofflich verwertet werden.

Der aus der mechanischen Phasentrennung erhaltene entölte und wassergesättigte Feststoff enthält noch gewisse Reste an Lösemittel bzw. Lösemittelgemischen.

Diese Lösemittelreste werden anschließend thermisch in einem Trockner ausgetrieben. Da als Lösemittel vorzugsweise solche eingesetzt werden, deren Siedepunkt unterhalb des Siedepunktes des Wassers liegt bzw. solche Lösemittel, die mit Wasser ein unterhalb von Wasser siedendes Azeotrop bilden, ist für die Abtrennung dieser Lösemittel aus dem Feststoff ein wesentlich geringerer Energieaufwand notwendig als für die Abtrennung anderer Lösemittel oder des Wassers aus dem Feststoff. Nach Kondensation des aus dem Feststoff ausgetriebenen, niedrigsiedenden Lösemittels bzw. azeotropen Lösemittel-Wasser-Gemisches können diese entweder zur Homogenisierung des Ölschlammes zurückgeführt oder ohne weitere Behandlung der abgetrennten und dem Raffinationsprozeß zugeführten Flüssigphase zugeführt werden.

Der Feststoff weist überraschenderweise einen Rest-Kohlenwasserstoffgehalt von < 0,3 MA-% auf, das heißt es kann mit dem erfindungsgemäßen Verfahren eine nahezu vollständige Entölung unabhängig von unterschiedlichen Ursprungsölgehalten erreicht und somit der Feststoff einer stofflichen verwertung zugeführt werden.

Besonders interessant an diesem erfindungsgemäßen Verfahren ist, daß es im Vergleich zu anderen Verfahren mit wesentlich geringem Energieaufwand auskommt, da weder eine Erwärmung der Ölschlämme vor der Aufbereitung notwendig ist, noch eine vollständige Trocknung des Feststoffes zur Entfernung der eingesetzten organischen Lösemittel. Für die Abtrennung eines mit Wasser ein Azeotrop bildendes Lösemittel, wie z.B. Toluol, ist nur etwa 10% des Energieeintrags notwendig im Vergleich zur reinen Wasserverdampfung.

Mit diesem Verfahren wird darüber hinaus eine häufig bei der Heißextraktion auftretende Schwierigkeit, nämlich die Schaumbildung, umgangen. Bei einer Heißextraktion gegebenenfalls eingesetzte Anti-Schaummittel werden im Feststoff aufkonzentriert und gefährden damit eine Verwertung des Feststoffs.

Mögliche Ausführungsformen der Erfindung bezüglich der Verwertung des entölten, feuchten Feststoffs sind, diesen mit hydraulischen, puzzolanischen oder latent-hydraulischen Bindemitteln zu einem erdfeuchten oder pastösen Verfestigungsprodukt oder zu einem grobkörnigen bzw. stückigen Verfestigungsprodukt zu konditionieren und als Verfüllmaterial oder Baustoff zu verwerten. Alternativ kann der entölte, feuchte Feststoff aber auch getrocknet und als feinkörniger Füllstoff, Baustoff oder als Rohmehlkomponente bei der Zementherstellung verwertet werden.

Eine interessante Ausführungsform des erfindungsgemäßen Verfahrens bietet sich für die Aufbereitung und Verwertung von Ölschlämmen mit hohen Quecksilbergehalten an.

Überraschenderweise gelingt es nämlich, das ursprünglich im Erdöl enthaltende Quecksilber aus der flüssigen Phase vollständig abzutrennen und mit dem entölten, feuchten Feststoff auszuschleusen. Damit ist eine problemlose stoffliche Verwertung der flüssigen Phase zum Beispiel im Raffinationsprozeß möglich. Der quecksilberhaltige Feststoff kann nach bewährten technischen Verfahren einer thermischen Behandlung unterzogen werden, bei der das Quecksilber abgedampft und wieder kondensiert wird, so daß der solcherart gereinigte Feststoff ebenfalls problemlos einer Verwertung zugeführt werden kann.

Das erfindungsgemäße Verfahren wird nachstehend anhand eines vereinfachten Verfahrensfließbildes erläutert.

Die öl/wasser-haltigen Feststoffe (a) werden zunächst gegebenenfalls einer Siebung (1) zur Abtrennung des gegebenenfalls vorhandenen störenden Grobgutes (b) unterzogen. Die auf diese Weise gegebenenfalls vorbehandelten Ölschlämme (c) werden anschließend mit Wasser (d) unter Zuführung des Lösemittels bzw. des Lösemittelsgemisches (e) vermischt und homogenisiert (2). Der Wassergehalt beträgt dann vorzugsweise 25 bis 40 MA-%.

Dieses Gemisch (f) wird anschließend in einer mechanischen, vorzugsweise kontinuierlich betriebenen Phasentrennung (3) in eine öl/wasser/lösemittel-haltige flüssige Phase (g) und eine weitgehend entölte wasser/lösemittel-haltige Feststoffphase (h) aufgetrennt. Die flüssige Phase wird meist ohne weitere Behandlung in einem Erdöl-Raffinationsprozeß verwertet. Das Lösemittel bzw. Lösemittelgemisch (e) wird vorzugsweise aus diesem Raffinationsprozeß entnommen und zur Aufbereitung der Ölschlämme verwendet.

Aus dem entölten, feuchten Feststoff können die niedriger als Wasser siedenden Lösemittel oder -gemische bzw. die mit Wasser ein niedriger als Wasser siedendes Azeotrop bildenden Lösemittel oder -gemische thermisch vollständig bereits in einem Teiltrocknungsschritt abgetrennt (4) werden. Das abgetrennte Lösemittel bzw. Lösemittel/Wasser-Azeotrop (i) kann entweder in den Ölschlamm-Homogenisierungsschritt (2) zurückgeführt oder der aus der mechanischen Phasentrennung austretenden flüssigen Phase zugeführt werden. Der entölte, feuchte Feststoff (k) kann direkt, wie beschrieben, oder über eine zusätzliche Konditionierung (5) der Verwertung zugeführt werden. Im Falle von quecksilberhaltigen festen Rückständen werden diese thermisch nachbehandelt und der gereinigte Feststoff ebenfalls einer Verwertung zugeführt.

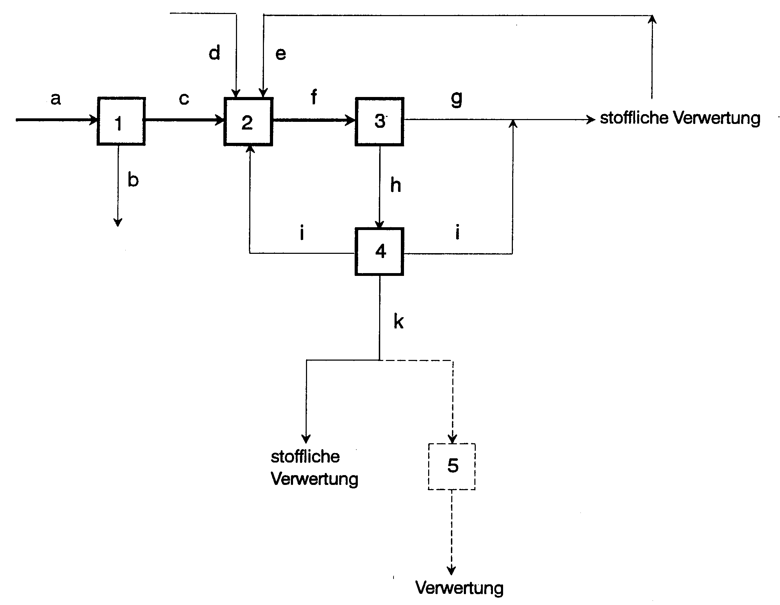

## Patentansprüche

1. Verwendung eines Verfahrens zur kontinuierlichen Aufbereitung und Verwertung von mit organischen Schadstoffen belasteten, wasserhaltigen Feststoffen mit hohem Anteil an feinkörnigem Material, wobei zunächst die gegebenenfalls vorhandenen störenden Grobbestandteile abgetrennt werden, dann Wasser zugegeben wird und später organische Lösungsmittel oder Lösungsmittelgemische zugesetzt werden, welche mit Wasser Azeotrope bilden und/oder leicht flüchtig sind und wobei die Lösemittel bzw. Lösemittelgemische mit dem öl- und wasserhaltigen Feststoffen vermischt und homogenisiert werden und anschließend dieses homogenisierte Gemisch aufgetrennt wird, woraufhin der abgetrennte, bereits weitgehend entölte, feuchte Feststoff thermisch, vorzugsweise durch Teiltrocknung von restlichen Lösungsmitteln bzw. Lösungsmittelgemischen befreit wird, woraufhin der Feststoff stofflich verwertet wird, dadurch gekennzeichnet, daß ein Material mit 3 MA-% bis 90 MA-% Erdöl eingesetzt wird bei unterschiedlichen Mengen Wasser zunächst die Viskosität der erdöl- und wasserhaltigen Feststoffe durch Zusatz von weiterem Wasser ohne Temperaturerhöhung erniedrigt und auf einen Gesamtwassergehalt von 25 bis 40 MA-% eingestellt wird, danach mittels einer Zentrifuge oder eines Dekanters mechanisch in eine flüssige und eine feste Phase aufgetrennt wird und wobei das in der flüssigen Phase enthaltene Erdöl, Lösemittel und Wasser ebenfalls stofflich verwertet werden und die feste Phase maximal 0,3 Ma% unlösliche Kohlenwasserstoffe, überwiegend Asphaltene enthält.

2. Verwendung eines Verfahrens gemäß Anspruch 1, dadurch gekennzeichnet, daß als Lösemittel bzw. Lösemittelgemische Siedefraktionen aus dem Erdölraffinationsprozeß verwendet werden und anschließend nach dem Aufbereitungsprozeß mit der abgetrennten flüssigen Phase wieder in den Raffinationsprozeß zurückgeführt werden.

3. Verwendung eines Verfahrens nach den Ansprüchen 1 und 2, dadurch gekennzeichnet, daß als Lösemittel bzw. Lösemittelgemische verunreinigte Lösemittel aus Spülprozessen und Lösemittelrückgewinnungsverfahren verwendet und die nach dem Aufbereitungsprozeß abgetrennten flüssigen Phasen weitgehend stofflich verwertet werden.

4. Verwendung eines Verfahrens nach einem der Ansprüche 1 bis 3, dadurch gekennzeichnet, daß der entölte, lösemittelfreie, feuchte Feststoff zur Verfüllung/Rekultivierung von ausgekofferten, ehemaligen Ölschlammdeponien, oberirdischen Gruben oder Halden oder im Untertagebergbau als Versatzmaterial verwertet wird.

5. Verwendung eines Verfahrens nach einem der Ansprüche 1 bis 3, dadurch gekennzeichnet, daß der entölte, feuchte Feststoff mit geeigneten hydraulischen, puzzolanischen bzw. latent-hydraulischen Bindemitteln zu einem erdfeuchten oder pastösen Verfestigungsprodukt konditioniert und als Verfüllmaterial oder Baustoff verwertet wird.

6. Verwendung eines Verfahrens nach einem der Ansprüche 1 bis 3, dadurch gekennzeichnet, daß der entölte, feuchte Feststoff mit geeigneten hydraulischen, puzzolanischen bzw. latent-hydraulischen Bindemitteln zu einem grobkörnigen bzw. stückigen Verfestigungsprodukt konditioniert und anschließend als Verfüllmaterial oder Baustoff verwertet wird.

7. Verwendung eines Verfahrens nach einem der Ansprüche 1 bis 3, dadurch gekennzeichnet, daß der entölte, feuchte Feststoff getrocknet wird und als feinkörniger Füllstoff, Baustoff oder als Rohmehlkomponente zur Zementherstellung verwertet wird.

8. Verwendung eines Verfahrens nach einem der Ansprüche 1 bis 7, dadurch gekennzeichnet, daß Ölschlämme mit hohen Quecksilbergehalten mit eingesetzt werden, wobei das ursprünglich im Erdöl enthaltene Quecksilber aus der flüssigen Phase vollständig abgetrennt, mit dem Feststoff ausgeschleust und dabei die stoffliche Verwertung der flüssigen Phase ermöglicht wird.

## Claims

1. Use of a process for the continuous processing and utilization of water-containing solids loaded with organic pollutants and having a high content of fine-grained material, wherein any disturbing coarse components are first separated, water is then added, and organic solvents or mixtures of solvents are added later which form azeotropes with water and/or are highly volatile, wherein said solvents or mixtures of solvents are mixed with the petroleum and water containing solids, and the mixture is homogenized, and this homogenized mixture is subsequently separated, whereupon the separated wet solid which is already deoiled to a significant extent is thermally freed from residual solvents or mixtures of solvents, preferably by partial drying, whereupon the solid is utilized materially, characterized in that a material containing from 3 mass % to 90 mass % of petroluem is employed, with different amounts of water, the viscosity of the petroleum and water containing solids is first decreased by the addition of additional water without increasing the temperature, and adjusted to a total water content of from 25 to 40 mass %, followed by mechanically separating it into a liquid and a solid phase by means of a centrifuge or a decanter, wherein the petroleum, solvent and water contained in the liquid phase are also materially utilized and the solid phase contains not more than 0.3 mass % of insoluble residual hydrocarbons (mainly asphaltenes).

2. The use of a process according to claim 1, characterized in that boiling fractions from the petroleum refining process are used as said solvents or mixtures of solvents, which are subsequently recycled to the refining process together with the separated liquid phase after the processing.

3. The use of a process according to claims 1 and 2, characterized in that contaminated solvents from rinsing processes and solvent recycling processes are used as said solvents or mixtures of solvents, and the liquid phases separated after the processing are utilized materially to a significant extent.

4. The use of a process according to any of claims 1 to 3, characterized in that the deoiled, solvent-free, wet solid is utilized for the filling/reculturing of excavated former oil sludge dumps, overground mines or stone dumps, or as a filling material in underground mining.

5. The use of a process according to any of claims 1 to 3, characterized in that the deoiled, wet solid is conditioned with suitable hydraulic, puzzolanic or latent-hydraulic binders to give a slightly moist or paste-like solidification product which is utilized as a filling material or building material.

6. The use of a process according to any of claims 1 to 3, characterized in that the deoiled, wet solid is conditioned with suitable hydraulic, puzzolanic or latent-hydraulic binders to give a coarse-grained or lumpy solidification product which is then utilized as a filling material or building material.

7. The use of a process according to any of claims 1 to 3, characterized in that the deoiled, wet solid is dried and utilized as a fine-grained filler, building material or as a raw meal component for cement production.

8. The use of a process according to any of claims 1 to 7, characterized in that oil sludges with high mercury contents are included, wherein the mercury originally contained in the petroleum is completely separated from the liquid phase and removed together with the solid, which enables the material utilization of the liquid phase.

## Revendications

1. Utilisation d'un procédé pour le traitement et la récupération continus de matières solides contenant de l'eau, contaminées par des polluants organiques, contenant une proportion élevée de matières à fine granulométrie, dans lequel on sépare d'abord les constituants grossiers gênants éventuellement présents, puis on ajoute de l'eau, et on ajoute ultérieurement des solvants ou des mélanges de solvants organiques, qui avec l'eau forment des azéotropes et/ou sont facilement volatils, et dans lequel les solvants ou mélanges de solvants sont mélangés et homogénéisés avec les matières solides contenant de l'huile et de l'eau, puis ce mélange homogénéisé est séparé, et ensuite la matière solide humide, déjà presque entièrement déshuilée, séparée, est par un procédé thermique, de préférence par un séchage partiel, débarrassée des solvants ou mélanges de solvants résiduels, et ensuite la matière solide est matériellement récupérée, caractérisée en ce qu'on utilise une matière contenant de 3 à 90 % en masse de pétrole ; en présence de quantités d'eau variables, on diminue d'abord la viscosité des matières solides, contenant du pétrole et de l'eau, par addition d'une nouvelle quantité d'eau sans élévation de la température, et on ajuste la teneur totale en eau à une valeur de 25 à 40 % en masse, puis, à l'aide d'une centrifugeuse ou d'un décanteur, on procède à une séparation mécanique en une phase liquide et en une phase solide, le pétrole contenu dans la phase liquide, les solvants et l'eau étant alors éventuellement matériellement récupérés, la phase solide contenant un maximum de 0,3 % en masse d'hydrocarbures insolubles, essentiellement des naphtalènes.

2. Utilisation d'un procédé selon la revendication 1, caractérisé en ce qu'on utilise en tant que solvants ou mélanges de solvants des coupes d'un procédé de raffinage du pétrole, puis, après l'opération de traitement on les renvoie avec la phase liquide séparée dans le procédé de raffinage.

3. Utilisation d'un procédé selon les revendications 1 et 2, caractérisée en ce qu'on utilise, en tant que solvants ou mélanges de solvants, des solvants contaminés provenant d'opérations de rinçage et d'opérations de récupération de solvants, et les phases liquides séparées après l'opération de traitement sont presque complètement matériellement récupérés.

4. Utilisation d'un procédé selon l'une des revendications 1 à 3, caractérisée en ce que la matière solide humide, exempte de solvant et déshuilée, est utilisée pour le remblayage/la remise en culture de décharges de boues pétrolières anciennes, déglaisées, de mines à ciel ouvert ou de terrils, ou encore dans les exploitations minières souterraines, en tant que matériau de remblai.

5. Utilisation d'un procédé selon l'une des revendications 1 à 3, caractérisée en ce que la matière solide humide et déshuilée est conditionnée avec un liant hydraulique, pouzzolanique ou latent-hydraulique approprié, pour donner un produit de consolidation ayant la consistance de la terre humide, ou pâteux, et est revalorisée en tant que matériau de remblayage ou de construction.

6. Utilisation d'un procédé selon l'une des revendications 1 à 3, caractérisée en ce que la matière solide humide, déshuilée, est conditionnée avec des liants hydrauliques, pouzzolaniques ou hydrauliques latents appropriés, pour donner un produit de consolidation à grosse granulométrie ou en morceaux, puis est utilisée en tant que matériau de remblayage ou de construction.

7. Utilisation d'un procédé selon l'une des revendications 1 à 3, caractérisée en ce que la matière solide humide déshuilée est séchée et est utilisée en tant que matière de charge à fine granulométrie, matériau de construction ou en tant que composant de farine crue pour la fabrication du ciment.

8. Utilisation d'un procédé selon l'une des revendications 1 à 7, caractérisée en ce qu'on utilise des boues pétrolières ayant une teneur élevée en mercure, le mercure initialement présent dans le pétrole étant entièrement séparé de la phase liquide et évacué en même temps que la matière solide, ce qui permet l'utilisation matérielle de la phase liquide.
